(19) Europäisches Patentamt
European Patent Office
Office européen des brevets

(11) Veröffentlichungsnummer: **0 477 601 A1**

## (12) EUROPÄISCHE PATENTANMELDUNG

(21) Anmeldenummer: **91114794.0**

(22) Anmeldetag: **03.09.91**

(51) Int. Cl.5: **B23P 15/10**, F01C 21/08, F04C 2/08

(30) Priorität: **28.09.90 DE 4030702**

(43) Veröffentlichungstag der Anmeldung:
**01.04.92 Patentblatt 92/14**

(84) Benannte Vertragsstaaten:
**CH DE FR GB IT LI**

(71) Anmelder: **LEYBOLD AKTIENGESELLSCHAFT**
**Wilhelm-Rohn-Strasse 25**
**W-6450 Hanau am Main 1(DE)**

(72) Erfinder: **Rohs, Hans-Günther**

Neuffenstrasse 9
W-7324 Rechberghausen(DE)
Erfinder: **Schulte, Manfred**
Hünenstrasse 4
W-5000 Köln 80(DE)
Erfinder: **Steffens, Ralf**
Homburger Strasse 22
W-5000 Köln 51(DE)

(74) Vertreter: **Leineweber, Jürgen, Dipl.-Phys.**
**Nagelschmiedshütte 8**
**W-5000 Köln 40(DE)**

(54) **Verfahren zur Herstellung eines Drehkolbens für eine Vakuumpumpe und nach diesem Verfahren hergestellter Drehkolben.**

(57) Die Erfindung bezieht sich auf ein Verfahren zur Herstellung eines Drehkolbens (1) für eine Vakuumpumpe; um eine vereinfachte und kostengünstige Herstellung zu ermöglichen, wird vorgeschlagen, daß zunächst Einzelbleche (4, 5, 6) durch Stanzen, Schneiden oder dergleichen hergestellt werden, welche der Größe von Schnitten durch den Rotor entsprechen, und daß danach die Einzelbleche zu einem Paket gefügt und miteinander verbunden werden.

Die Drehkolben von Vakuumpumpen, insbesondere Zweiwellenvakuumpumpen, haben in der Regel eine außergewöhnliche geometrische Form. Die Herstellung maßgenauer Drehkolben ist deshalb mit einem relativ hohen technischen Aufwand verbunden. Ein typisches Beispiel für Drehkolben dieser Art sind die Drehkolben von Wälzkolbenvakuumpumpen, die eine im wesentlichen achtförmige Gestalt haben. Ein Drehkolben dieser Art wird aus einem gesenkgeschmiedeten Rohling hergestellt, der anschließend spanabhebend bearbeitet wird. Auch die Drehkolben von Klauenpumpen und Schraubenpumpen haben eine schwierig herzustellende Form. Sie werden in der Regel aus dem Vollen gefräst oder vorgegossen. Schließlich ist auch die Herstellung der Drehkolben von Drehschieber- und Sperrschieberpumpen wegen ihres Schieberschlitzes bzw. ihres Sperrschiebers aufwendig und deshalb kostspielig.

Der vorliegenden Erfindung liegt die Aufgabe zugrunde, ein vereinfachtes Verfahren zur Herstellung eines Drehkolbens für eine Vakuumpumpe zu schaffen, dessen Anwendung die Fertigung kostengünstigerer, leichterer und in Bezug auf ihre physikalischen Eigenschaften verbesserter Drehkolben ermöglicht.

Erfindungsgemäß wird diese Aufgabe dadurch gelöst, daß Einzelbleche durch Stanzen, Schneiden oder dergleichen hergestellt werden, welche der Größe von Schnitten durch den Drehkolben entsprechen, und daß die Einzelbleche zu einem Paket gefügt und miteinander verbunden werden. Die Herstellung von Einzelblechen ist mit hoher Präzision möglich, so daß sie unmittelbar mit ihrem Fertigprofilmaß - oder zumindest mit einem das Sollmaß nur geringfügig übersteigenden Aufmaß - gefertigt werden können. Haben die hergestellten Einzelbleche gleich ihr Fertigprofilmaß, dann muß die Profilaußenkontur des zusmmengefügten Drehkolbenblechpaketes nicht mehr bearbeitet werden. Für den Fall, daß die Bleche mit einem geringfügigen Aufmaß hergestellt werden, ist die abschließende Bearbeitung des zusammengefügten Drehkolbenblechpaketes relativ einfach. Beispielsweise kann die Profilaußenkontur bereits durch profilschleifen auf das Fertig-Sollmaß gebracht werden.

Das erfindungsgemäße Verfahren ermöglicht in besonders einfacher Weise eine Gewichtsreduzierung der Drehkolben. Dazu ist es lediglich erforderlich, zumindest einen Teil der innenliegenden Einzelbleche mit Durchbrechungen zu versehen. Dadurch entstehen im Kolben Hohlräume, die gegenüber ihrer Umgebung dicht sind und - beispielsweise bei den Drehkolben für Rootspumpen - eine Gewichtsersparnis bis zu 40 % ermöglichen. Dadurch wird nicht nur die Trägheitsmasse des Drehkolbens wesentlich kleiner; auch seine thermischen Eigenschaften sind infolge der Reduzierung der thermischen Trägheit des Drehkolbens besser.

Besonders vorteilhaft ist es, die Kolben von Rootspumpen, deren Fertigungsaufwand infolge ihrer besonderen Form relativ hoch ist, nach dem erfindungsgemäßen Verfahren herzustellen. Der Fertigungsaufwand wird wesentlich geringer; das thermische Verhalten der Rootspumpen, die mit nach dem erfindungsgemäßen Verfahren hergestellten Kolben ausgerüstet sind, ist besser. Diese Ausführungen gelten auch für Schraubenpumpen, deren Kolben ebenfalls nach dem erfindungsgemäßen Verfahren hergestellt werden können.

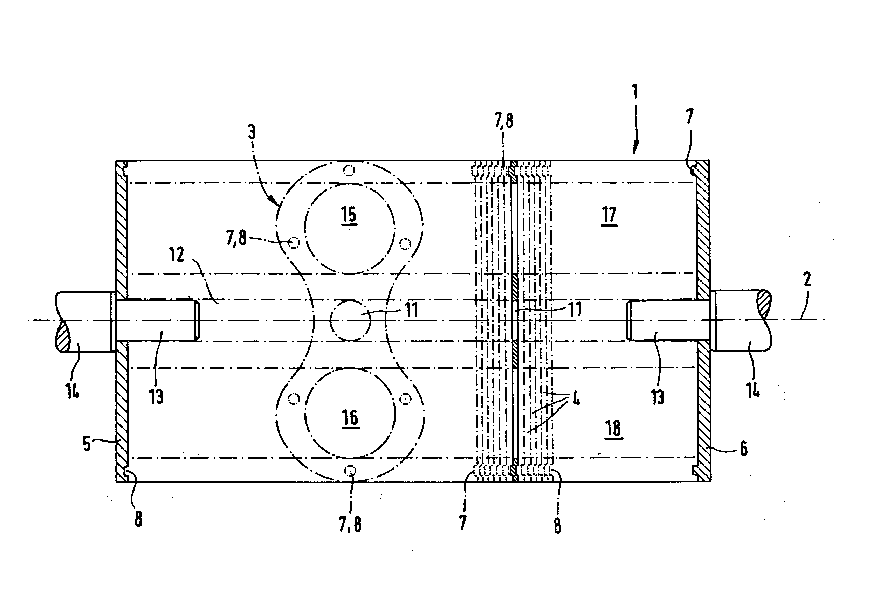

Weitere Vorteile und Einzelheiten der Erfindung soll anhand eines in der Figur dargestellten, nach dem erfindungsgemäßen Verfahren hergestellten Drehkolben für eine Wälzkolbenvakuumpumpe erläutert werden.

Die Figur zeigt einen Längsschnitt durch einen nach dem erfindungsgemäßen Verfahren hergestellten Drehkolben 1 für eine Wälzkolbenvakuumpumpe. Die Achse des Drehkolbens ist mit 2 bezeichnet. Die Querschnittsform 3 des Drehkolbens (Schnitt senkrecht zur Achse 2) ist strichpunktiert angedeutet.

Im Schöpfraum einer Wälzkolbenvakuumpumpe befinden sich zwei Drehkolben dieser Art. Sie rotieren jeweils um ihre Achse 2, und zwar derart, daß sie weder einander noch die Schöpfraumwände berühren. Die Drehkolben erreichen Temperaturen bis zu 200° C bei Drehzahlen bis zu 6000 U/min.

Der Drehkolben 1 besteht aus einer Vielzahl von Einzelblechen 4, 5 und 6, wobei die Bleche 5 und 6 die beiden Stirnseiten des Drehkolbens 1 bilden.Die Form der Bleche 4, 5, 6 entspricht dem Querschnitt eines Rootspumpenkolbens, also einem Schnitt senkrecht zur Achse 2. Prinzipiell besteht auch die Möglichkeit, den Einzelblechen die Form anderer Schnittflächen zu geben; in der Regel müssen dann aber Bleche mit unterschiedlichen Größen hergestellt werden.

Bei der Wahl der Dicke der Bleche 4 ist zu berücksichtigen, daß sie zum einen eine möglichst genaue Profilkontur haben sollen. Andererseits sollen die Einzelbleche hinsichtlich einer reduzierten Gesamtblechanzahl möglichst dick sein. Die Verwendung von Stahlblech mit einer Dicke von 2 bis 4 mm, vorzugsweise 3 mm, hat sich als besonders vorteilhaft erwiesen. Durch Stanzen (auch durch Nibbeln) sowie durch Schneiden (insbesonderer Laserschneiden) lassen sich derartige Einzelbleche 4 mit einer besonders genauen Konturenform herstellen. Nach ihrer Herstellung werden die Bleche 4, 5 und 6 zu einem Paket gefügt.

Um die gewünschte Drehkolbenform möglichst exakt zu erreichen, ist während des Zusammenfügens der Einzelbleche eine Führung von außen erforderlich. Die Führung kann von außen oder über einen Zentrierdorn erfolgen, der gleichzeitig die Drehkolbenwelle sein kann. Eine weitere Möglichkeit besteht darin, daß die Einzelbleche 4 bis 6 mit zueinander korrespondierenden Vorsprüngen 7 und Aussparungen 8 ausgerüstet werden, so daß eine Selbstzentrierung eintritt. Zusätzlich besteht die Möglichkeit, durch entsprechende Toleranzfestlegung gleichzeitig für eine feste Verbindung des Blechpaketes sorgen, d.h.: durch hohen axialen Druck werden die einzelnen Vorsprünge 7 und Aussparungen 8 bei richtiger Toleranzwahl hinreichend fest ineinandergepreßt.

Nach dem Zusammenfügen des Kolbenblechpaktes müssen die Einzelbleche 4, 5 und 6 miteinander verbunden werden. Dieses kann durch Schweißen, Löten, Kleben usw. - zweckmäßig unter axialem Druck - oder auch - wie beschrieben - mit Hilfe der Zentrier-Vorsprünge und -Aussparungen 8 erfolgen. Aus den Spalten zwischen den Einzelblechen 4 bis 6 möglicherweise austretendes Verbindungsmittel kann durch Schleifen, das bei mit geringfügigem Aufmaß (etwa 2/10 mm) hergestellten Einzelblechen ohnehin erforderlich ist, beseitigt werden. Auch mit Hilfe von mehreren achsparallelen Bolzen können die zusammengefügten Bleche miteinander verbunden werden.

Besonders vorteilhaft ist es, wenn bereits die Ausgangsbleche, aus denen die Einzelbleche (4, 5, 6) durch Stanzen oder Schneiden hergestellt werden, eine Lotschicht, Klebeschicht oder dergleichen aufweisen. Nach dem Zusammenfügen des Kolbenblechpaketes ist es dann lediglich erforderlich, die zur Herstellung der Verbindung erforderlichen Maßnahmen (Pressen, Erhitzen oder dergleichen) durchzuführen.

Zweckmäßig schließt sich an den Verbindungsschritt - vor oder nach dem Profilschleifen - ein Imprägnierungsschritt an. Dadurch werden eventuell noch vorhandene Kapillaren verschlossen, was von besonderer Bedeutung ist, wenn der Drehkolben 1 - wie weiter unten beschrieben - abzudichtende Hohlräume aufweist.

Beim dargestellten Ausführungsbeispiel sind die stirnseitig angeordneten Einzelbleche 5, 6 etwa doppelt so dick wie die Einzelbleche 4. Die Profilkontur dieser Bleche 5, 6 ist dadurch zwar etwas ungenauer; diese Ungenauigkeit wird jedoch wieder beseitigt, wenn die endgültige Länge des Drehkolbens 1 durch Abdrehen der Stirnseiten des zusammengefügten Drehkolbens festgelegt wird.

Beim dargestellten Ausführungsbeispiel haben sämtliche Einzelbleche 4 bis 6 eine zentrale, kreisförmige Durchbrechung 11. Dadurch entsteht beim fertigen Drehkolben 1 ein zentraler Durchgang 12, für die Aufnahme der Welle. Beim dargestellten Ausführungsbeispiel nimmt der Durchgang 12 von den jeweiligen Stirnseiten her verjüngte Abschnitte 13 von Wellenstümpfen 14 auf. Die Verbindung der Welle bzw. der Wellenstümpfe 14 mit dem Drehkolben 1 kann wieder durch Schweißen, Löten, Preßsitz, Kleben oder dergleichen erfolgen. Weiterhin oder zusätzlich können Feder/Nut- oder Rändelverbindungen vorgesehen sein.

Zur Befestigung der Wellenstümpfe 14 würde es ausreichen, wenn nur Einzelbleche 4, 5, 6, die sich in den stirnseitigen Bereichen befinden, die zentrale Durchbrechung 11 aufweisen würden. Aus Gewichtsersparnisgründen ist es jedoch zweckmäßig, wenn auch die weiter innenliegenden Einzelbleche 4 diese Durchbrechungen 11 aufweisen.

Eine weitere, maßgebliche Gewichtsersparnis kann durch weitere Durchbrechungen 15, 16 erreicht werden, die beim Ausführungsbeispiel kreisförmige Gestalt haben und sich in den seitlichen Bereichen der Einzelbleche 4 befinden. Die stirnseitigen Bleche 5 und 6 weisen derartige Durchbrechungen nicht auf, so daß der Drehkolben 1 relativ große, nach außen abgedichtete und zu einer hohen Gewichtsersparnis beitragende Hohlräume 17, 18 aufweist.

Zweckmäßig ist es, das Wuchten des Drehkolbens als letzten Schritt des Herstellungsverfahrens vorzunehmen, damit die Masse von Verbindungs- oder Imprägniermitteln, die sich innerhalb der Hohlräume des Drehkolbens möglicherweise ungleichmäßig verteilt haben, berücksichtigt wird. Das Wuchten erfolgt durch gezielte Materialentfernung. Die ohnehin dicker ausgeführten stirnseitigen Bleche 5, 6 stehen dazu zur Verfügung.

**Patentansprüche**

1.  Verfahren zur Herstellung eines Drehkolbens (1) für eine Vakuumpumpe, dadurch gekennzeichnet, daß Einzelbleche (4, 5, 6) durch Stanzen, Schneiden oder dergleichen hergestellt werden, welche der Größe von Schnitten durch den Rotor entsprechen, und daß die Einzelbleche zu einem Paket gefügt und miteinander verbunden werden.

2.  Verfahren nach Anspruch 1, dadurch gekennzeichnet, daß die Einzelbleche (4, 5, 6) vor oder während des Verbindungsschrittes zusammengepreßt werden.

3.  Verfahren nach Anspruch 1 oder 2, dadurch gekennzeichnet, daß die Einzelbleche (4, 5, 6) mit einer die Sollmaße um geringfügige Aufmaße übersteigenden Größe hergestellt werden und daß das durch Fügen und/oder Pressen sowie Verbinden der Einzelbleche entstandene Kolbenblechpaket in einem Nachbearbeitungsschritt, beispielsweise Profilschleifen der peripheren und/oder der Stirnflächen, auf das Fertig-Sollmaß gebracht wird.

4. Verfahren nach Anspruch 1, 2 oder 3, dadurch gekennzeichnet, daß die Einzelbleche (4, 5, 6) durch Schweißen, Löten, Kleben, mit Hilfe von Bolzen oder dergleichen, vorzugsweise unter Druck, miteinander verbunden werden.

5. Verfahren nach einem der Ansprüche 1 bis 4, dadurch gekennzeichnet, daß das durch Fügen und Verbinden der Einzelbleche (4, 5, 6) entstandene Kolbenblechpaket - gegebenenfalls nach einem Nacharbeitungsschritt - imprägniert wird.

6. Verfahren nach einem der vorhergehenden Ansprüche 1 bis 5, dadurch gekennzeichnet, daß der Drehkolben nach seiner Herstellung gewuchtet wird.

7. Nach einem der Verfahren nach Anspruch 1 bis 4 hergestellter Drehkolben für eine Vakuumpumpe, dadurch gekennzeichnet, daß er aus einer Vielzahl von zusammengefügten und miteinander verbundenen Einzelblechen (4, 5, 6) besteht.

8. Drehkolben nach Anspruch 7, dadurch gekennzeichnet, daß zumindest ein Teil (4) der Einzelbleche (4, 5, 6) Durchbrechungen (11, 15, 16) aufweisen.

9. Drehkolben nach Anspruch 8, dadurch gekennzeichnet, daß zumindest die in den stirnseitigen Bereichen liegenden Einzelbleche (4, 5, 6) kongruente Öffnungen (11) zur Aufnahme von Wellenabschnitten (13) aufweisen.

10. Drehkolben nach Anspruch 8 oder 9, dadurch gekennzeichnet, daß innenliegende Bleche (4) Durchbrüche (11, 15, 16) zum Zwecke der Gewichtsersparnis aufweisen.

11. Drehkolben nach Anspruch 9, dadurch gekennzeichnet, daß er mit Wellenstümpfen (14) ausgerüstet ist, die mit Abschnitten (13) in die Öffnungen (11, 12) eingreifen und durch Löten, Schweißen, Kleben oder dergleichen befestigt sind.

12. Drehkolben nach Anspruch 11, dadurch gekennzeichnet, daß die Abschnitte (13) einen verringerten Durchmesser haben.

13. Drehkolben nach einem der Ansprüche 7 bis 12, dadurch gekennzeichnet , daß zumindest ein Teil der Einzelbleche (4, 5, 6) korrespondierende Erhöhungen (7) und Vertiefungen (8) zum Zwecke ihrer Zentrierung aufweisen.

14. Kolben nach Anspruch 13, dadurch gekennzeichnet, daß die Toleranzen der zueinander korrespondierenden Vorsprünge (7) und Vertiefungen (8) so gewählt sind, daß neben der Zentrierung eine feste axiale Verbindung eintritt.

15. Drehkolben nach einem der Ansprüche 7 bis 14 dadurch gekennzeichnet, daß die Einzelbleche aus Stahl bestehen und eine Dicke von 2 bis 4, vorzugsweise 3 mm, haben.

16. Drehkolben nach Anspruch 15, dadurch gekennzeichnet, daß die beiden die Stirnseiten bildenden Einzelbleche (5, 6) etwa doppelt so dick sind wie die übrigen Einzelbleche (4).

17. Drehkolben nach einem der Ansprüche 7 bis 16, dadurch gekennzeichnet, daß die Einzelbleche (4, 5, 6) bereits vor dem Schneiden oder Stanzen mit einer Lotschicht, Kleberschicht oder dergleichen ausgerüstet sind.

18. Drehkolben nach einem der Ansprüche 7 bis 17, dadurch gekennzeichnet, daß er ein für eine Rootspumpe geeigneter Kolben ist.

19. Drehkolben nach einem der Ansprüche 7 bis 17, dadurch gekennzeichnet, daß er ein für eine Schraubenpumpe geeigneter Kolben ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-1 703 835   (ALLWEILER)<br>* das ganze Dokument * * <br>– – – | 1,2,4,7-9,<br>15,19 | B 23 P 15/10<br>F 01 C 21/08<br>F 04 C 2/08 |
| X | GB-A-799 337   (WADE ENGINEERING)<br>* das ganze Dokument * * <br>– – – | 1,7-10,18 | |
| A | DE-A-1 653 858   (LANGEN)<br>* Seite 2 * * <br>– – – | 3,4,15,17 | |
| A | EP-A-0 169 904   (NIPPON PISTON RING)<br>* Abbildung 3 * * <br>– – – | 11,12 | |
| A | PATENT ABSTRACTS OF JAPAN vol. 7, no. 16<br>(M-187)(1161) 22. Januar 1983<br>& JP-A-57 173 587 ( MATSUSHITA DENKI SANGYO ) 25.<br>Oktober 1982<br>* Zusammenfassung * * <br>– – – | 13-15 | |
| A | GB-A-1 063 495   (C.A.V)<br>* Seite 1, Zeile 48 - Zeile 58 * * <br>– – – | 5 | |
| A | GB-A-2 102 071   (DENCO)<br>– – – | | RECHERCHIERTE SACHGEBIETE (Int. Cl.5) |
| A | FR-A-1 323 003   (CHANTIERS DE L'ATLANTIQUE)<br>– – – | | F 01 C<br>B 23 P<br>B 21 D<br>F 04 C |
| A | US-A-2 362 106   (UNGAR)<br>– – – – – | | |

Der vorliegende Recherchenbericht wurde für alle Patentansprüche erstellt

| Recherchenort | Abschlußdatum der Recherche | Prüfer |
|---|---|---|
| Den Haag | 06 Dezember 91 | RIS M. |